**Europäisches Patentamt**

**European Patent Office**

**Office européen des brevets**

(19)

(11) Veröffentlichungsnummer : **0 202 307**
**B1**

(12) **EUROPÄISCHE PATENTSCHRIFT**

(45) Veröffentlichungstag der Patentschrift :
07.03.90

(51) Int. Cl.⁵ : **G 03 B 23/02**

(21) Anmeldenummer : **85906053.5**

(22) Anmeldetag : **12.11.85**

(86) Internationale Anmeldenummer :
**PCT/EP 85/00611**

(87) Internationale Veröffentlichungsnummer :
**WO/8603025 (22.05.86 Gazette 86/11)**

(54) BEHÄLTER ZUR AUFNAHME EINES BILDERSTAPELS.

Teilanmeldung 88110192 eingereicht am 27.06.88.

(30) Priorität : 13.11.84 DE 3441464

(43) Veröffentlichungstag der Anmeldung :
26.11.86 Patentblatt 86/48

(45) Bekanntmachung des Hinweises auf die Patenterteilung : 07.03.90 Patentblatt 90/10

(84) Benannte Vertragsstaaten :
AT BE CH DE FR GB IT LI NL SE

(56) Entgegenhaltungen :
DE--A-- 2 822 851
FR--A-- 2 403 574

(73) Patentinhaber : **Licinvest AG**
**Hartbertstrasse 9**
**CH-7002 Chur (CH)**

(72) Erfinder : **ACKERET, Peter**
**Allmendstrasse 18**
**CH-8700 Küsnacht (CH)**

(74) Vertreter : **Röhl, Wolf Horst, Dipl.-Phys., Dr. et al**
**Dipl.-Ing. K. Sparing Dipl.-Phys. Dr. W.H. Röhl Rethels-**
**trasse 123**
**D-4000 Düsseldorf 1 (DE)**

**Beschreibung**

Die Erfindung betrifft einen Behälter zur Aufnahme eines Bilderstapels, das heißt eines Stapels rechteckiger gleichformatiger Bilder, wobei es sich vorzugsweise um Fotoabzüge handelt.

Derartige Behälter, als Bildwechsler zum zyklischen Umschichten der Bilder ausgebildet, sind in den US-PSen 4.238.898, 4.238.899, 4.241.528, 4.241.529, 4.245.417, 4.259.802 und 4.376.348 bekannt. Diese bekannten Behälter umfassen ein Gehäuse mit einem Sichtfenster, unter dem der Bilderstapel liegt und durch das das dem Fenster zugekehrt liegende Bild sichtbar ist. Aus dem Gehäuse ist parallel zu der vom Fenster definierten Ebene ein Schieber herausziehbar und wieder einschiebbar, der den Bilderstapel aufnimmt. Bei jedem vollständigen Bewegungszyklus des Schiebers wird ein Bild an einer Stapelseite abgenommen, bleibt also im Gehäuse zurück, und an der andern Stapelseite wieder zugefügt. Probleme ergeben sich, wenn die Bilder Fotoabzüge sind, wegen der im allgemeinen gewölbten Form der Bilder, die — wenn man nicht besondere Maßnahmen trifft — aus dem herausgezogenen Schieber « herausquellen ». Aber auch ebene Bilder könnten aus dem Schieber herausfallen, wenn der Behälter etwa über Kopf geöffnet wird. Die im Stand der Technik vorgesehenen Maßnahmen, um ein solches Herausfallen oder -quellen zu vermeiden, sind am Schieber angebrachte Niederhalter, die die parallel zur Ausschubrichtung verlaufenden Kanten des Stapels oder auch die quer dazu verlaufenden Kanten übergreifen.

Die FR-A-2 403 574 offenbart einen Behälter, der die im Oberbegriff des Patentanspruchs 1 genannten Merkmale aufweist und als Blattwechsler zum zyklischen Umschichten eines eingelegten Blattstapels dient. Der Niederhalter nimmt während des Umschichtens eine stationäre Position ein, kann jedoch derart verlagert werden, daß die Blätter aus dem Schieber, wenn dieser herausgezogen ist, entnommen werden können.

Damit im Normalbetrieb die Blätter sicher im Schieber gehalten sind, übergreift der Niederhalter die Blattkanten mit hinreichender Ausladung und deckt infolgedessen einen Teilbereich des dem Fenster zugekehrt liegenden Blattes ab. Man wird deshalb das Sichtfenster nur so groß wählen, daß der Niederhalter nicht in dem vom Fenster exponierten Bereich sichtbar ist. Es ist aber erwünscht, möglichst die gesamte Blattfläche durch das Sichtfenster zu exponieren.

Aufgabe der Erfindung ist es, einen Behälter mit den im Oberbegriff des Patentanspruchs 1 genannten Merkmalen zu schaffen, bei dem einerseits zumindest annähernd die gesamte Blattfläche durch das Fenster exponiert sein kann, ohne daß der Niederhalter stört, und andererseits die Blätter bei herausgezogenem Schieber sicher in diesem gehalten werden.

Die im kennzeichnenden Teil des Patentanspruchs 1 genannten Merkmale definieren die gemäß der Erfindung vorgesehene Lösung dieser Aufgabe.

Die Federvorspannung sorgt dabei dafür, daß der Niederhalter beim Herausziehen des Schiebers aus dem Gehäuse stets die im Schieber liegenden Blätter gegen Herausfallen oder -quellen sichert, ohne daß der Benutzer besondere Maßnahmen zu treffen braucht, während umgekehrt die Anschläge automatisch bewirken, daß das im Fenster exponierte Blatt nicht vom Niederhalter teilweise abgedeckt ist.

Vorzugsweise wird der Niederhalter durch die am Gehäuse vorgesehenen Anschläge beim Schiebereinschub in eine Position verlagert, die zwischen der blattübergreifenden und der blattfreigebenden Position liegt.

Die erfindungsgemäße Ausbildung ist ebensowohl bei Bildwechslern wie auch bei Behältern ohne solche Wechselfunktion anwendbar.

Bevorzugte Ausführungsformen der Erfindung sind in den Unteransprüchen definiert und werden im Detail unter Bezugnahme auf die beigefügten Zeichnungen nachstehend erläutert.

Fig. 1 zeigt in Draufsicht und teilweise aufgeschnitten einen als Bildwechsler ausgebildeten Behälter gemäß der Erfindung, wobei der Schieber um einen Teilhub herausgezogen dargestellt ist.

Fig. 2 bis 10 zeigen Schnitte und Einzelheiten des Bildwechslers von Fig. 1.

Fig. 11 zeigt eine weitere Ausführungsform eines Bildwechslers in Draufsicht und teilweise aufgeschnitten mit ausgezogenem Schieber auf einer Hälfte der Figur.

Fig. 12 bis 15 zeigen Schnitte und Einzelheiten des Bildwechslers von Fig. 11.

Fig. 16 bis 18 zeigen im einzelnen die Wirkungsweise des Niederhalters der Ausführungsform der Fig. 1 bis 10.

Fig. 19 und 20 zeigen eine weitere Ausführungsform eines Niederhalters.

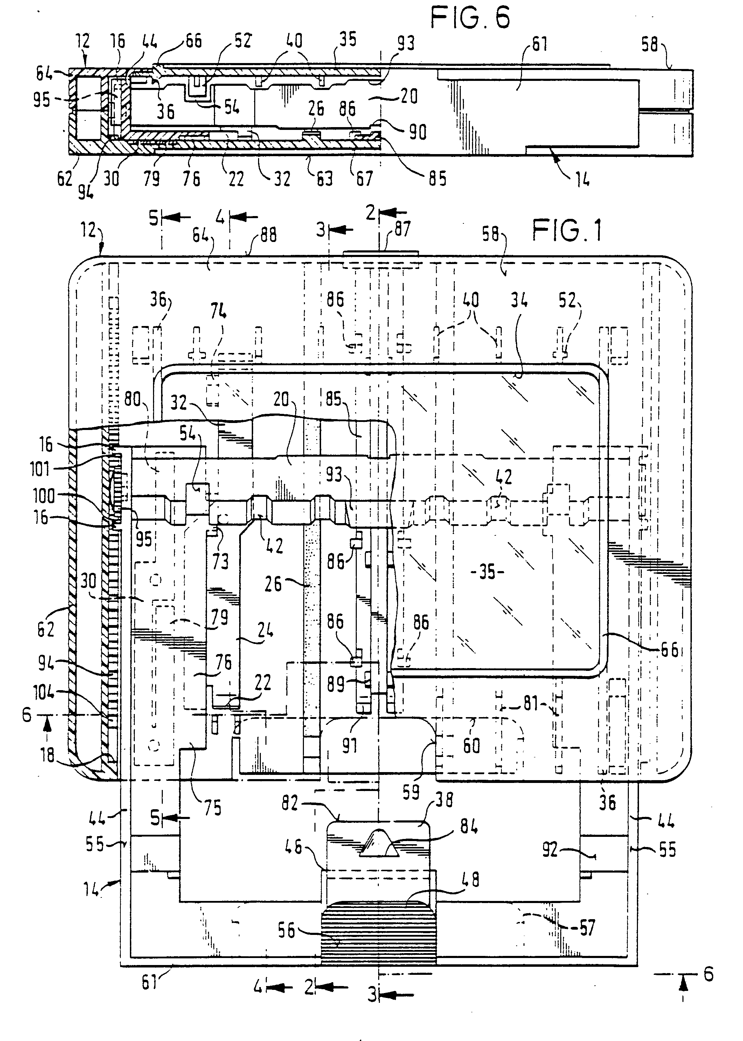

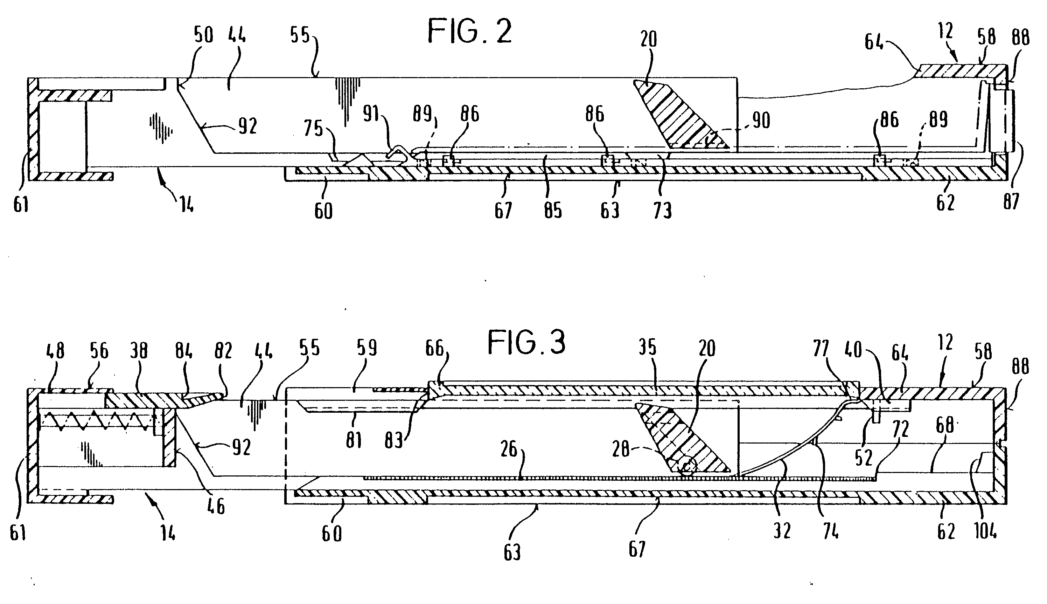

Der in Fig. 1 bis 10 dargestellte Bildwechsler umfaßt als erstes Rahmenteil ein Gehäuse 12 und als zweites Rahmenteil einen Schieber 14 zur Aufnahme eines Bilderstapels, wobei der Schieber 14 aus dem Gehäuse 12 um einen durch Anschläge 16 am Schieber und Gegenanschläge 18 am Gehäuse begrenzten Hub herausziehbar und wieder einschiebbar ist. Die Trenneinrichtung wird von einem Separatorsteg 20 gebildet. Die Zufuhreinrichtung wird von Haken 22 verkörpert, die an Blattfederarmen 24 sitzen. Die Halteeinrichtung zum Halten des Reststapels im Schieber wird ebenfalls von dem Separatorsteg gebildet, während das abgetrennte Einzelbild im Gehäuse durch das Zusammenwirken von im Gehäuse stationär angeordneten, mit einem Haftbelag 26 versehenen Schienen mit das Einzelbild gegen sie klemmenden, durch den Kontakt mit diesen zum Umlauf angetriebenen Rollen 28 gehalten wird. Schließlich wird die Leiteinrichtung durch Paare von Blattfedern 30 sowie mit den Federarmen 24 einstückig ausgebildete Federarme 32 verkörpert.

Die Federarme 24 und 32 drücken im eingeschobenen Zustand des Schiebers 14 den Bilderstapel (in Fig. 1 nicht gezeigt) gegen ein Sichtfenster, dessen innere Kontur mit 34 bezeichnet ist. Das dann im Stapel oberste Bild, ein Fotoabzug, soll dann möglichst plan liegen ; zu diesem Zweck ist es an seinem Umfang in einer Ebene abgestützt, die definiert ist durch seitliche Rippen 36, die Unterseite eines Griffstück-Schiebeteils 38 und auf der ihm gegenüberliegenden Seite durch an das Gehäuse angeformte Rippen 40.

Fig. 1 zeigt die teilausgezogene Position des Schiebers 14. Im eingeschobenen Zustand liegt der Separatorsteg jenseits dieser Rippen 40 ; da er aber weiter zum Fenster 35 vorsteht, als dem Niveau dieser Rippen entspricht, weist er für das Passieren derselben Einschnitte 42 auf.

Die Abstützung der Kanten des Stapels erfolgt seitlich (d. h. parallel zur Auszugsrichtung) durch Holme 44 des Schiebers. Frontseitig, das heißt auf der Seite des Schiebers, die beim Auszug am weitesten vom Gehäuse entfernt ist, wird die Abstützung der Kanten durch die Anschlagfläche 46 eines mittig angeordneten Griffstücks 48 sowie durch seitliche Anschlagflächen 50 am Schieber bewirkt. Am gegenüberliegenden Ende stützen sich die Kanten der Fotos an dem Gehäuse angeformten Anschlägen 52 ab, für die der Separatorsteg ebenfalls Durchlaß-Ausnehmungen 54 aufweist, die jedoch wesentlich tiefer sind als die für die Rippen 40.

Die Rippe 36 reicht weiter in das Innere des Schiebers hinein, als dem Niveau entspricht, das von der Oberkante 55 der Schieberholme definiert ist, so daß die Fotos nicht seitlich nach außen über die Schieberholme gleiten können. Die entsprechende Wirkung tritt zwischen Separatorsteg einerseits, Rippen 40 andererseits ein.

Das Griffstück 48 hat eine auf der Fensterseite des Gehäuses liegende Oberplatte 56 und eine Unterplatte 57, die breiter ist als die Oberplatte ; die das Fenster rahmenartig umgebende Deckwand 58 des Gehäuses weist im Bereich der Oberplatte einen Ausschnitt 59 auf, während die gegenüberliegende Gehäusewandung für die Unterplatte 57 komplementär bei 60 eingetieft ist. Demgemäß hat die Vorrichtung im geschlossenen Zustand eine in sich geschlossene, im wesentlichen rechteckige Kontur ohne vorstehende Teile.

Das Gehäuse und der Schieber sind Kunststoff-Spritzteile. Der Schieber ist ein einteiliges Element, bestehend aus Holmen, Separatorsteg, Griffstück und einer das Griffstück mit den Holmen — die L-förmigen Querschnitt besitzen — verbindenden Stirnwand 61.

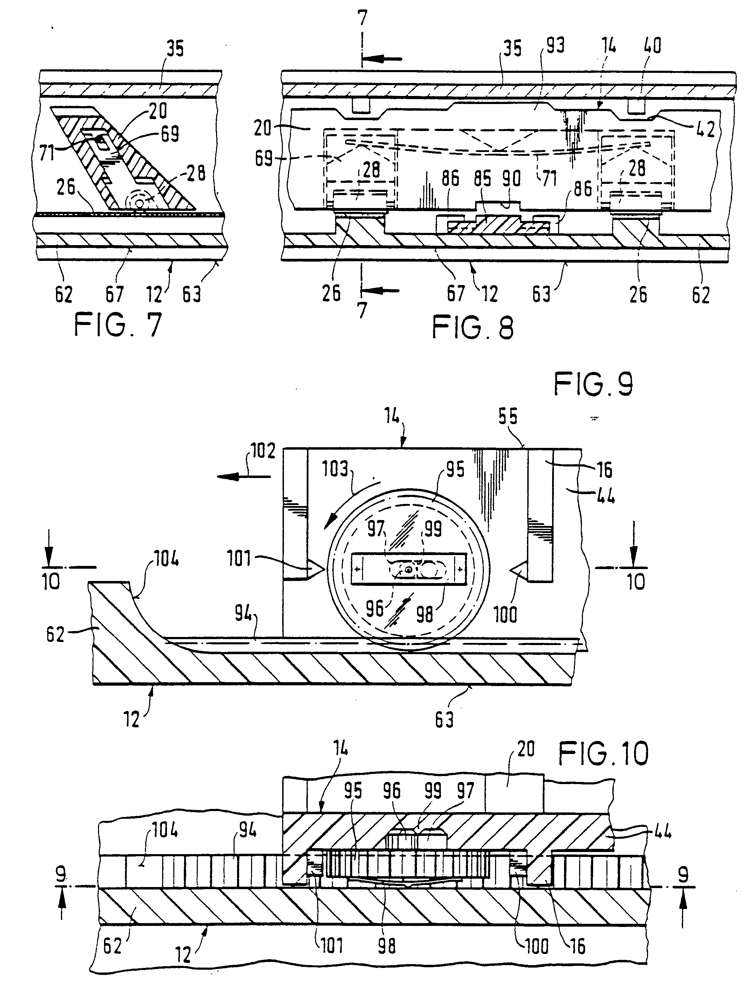

Das Gehäuse ist aus drei Teilen zusammengesetzt : Der Unterschale 62 mit Gehäuseboden 63, der rahmenartigen Oberschale 64 mit Fensterausschnitt, und dem in dieses eingesetzten Fenster 35. Das Gehäuse ist in Richtung der Schieberbewegung dadurch versteift, daß die Streben zwischen Deck- und Bodenwandung als Doppelträger ausgeführt sind, wie in Fig. 6 erkennbar. Die Gehäuseteile können miteinander verschweißt sein, oder man kann eine Schnappverbindung vorsehen.

Das Fenster weist rings um seine Hauptfläche einen schmalen, nach außen etwas vorstehenden Rand 66 auf, so daß es gegenüber dem ihn umgebenden Rahmen etwas vorsteht. Eine zur Kontur dieses Randes komplementäre Eintiefung ist auf der Außenseite der gegenüberliegenden Bodenwandung mit 67 bezeichnet und erlaubt das Übereinanderstapeln mehrerer Gehäuse.

Beim Herausziehen des Schiebers aus dem Gehäuse wird dieser mit einer Hand an Ober- und Unterplatte des Griffstücks erfaßt, während die andere Hand das Gehäuse hält. An den frontseitigen — also dem Separatorsteg abgewandten — Kanten der auf den Federarmenden liegenden Fotos greifen die Haken 22 an, wodurch eine gewisse Anzahl von Fotos — je nach der Höhe der Haken — der Trenneinrichtung zugeführt wird. Diese stellt sich letztlich als ein Durchlaßspalt dar, der einerseits von (im Ausführungsbeispiel) zwei an den Gehäuseboden innen angeformten Stufen 68, andererseits von der ihnen zugewandten Unterseite von Schuhen 69 begrenzt wird, die in den Separatorsteg eingesetzt sind und die in Fig. 7 im Schnitt und in Fig. 8 in Frontansicht erkennbar sind.

Zu jeder Stufe 68 gehört ein Schuh 69, und jedes System Stufe/Schuh ist beidseits der Symmetrieebene 70 der Vorrichtung angeordnet. Die Schuhe sind im Separatorsteg längsgeführt, mit einem Schneidenlager abgestützt und von einer eingelegten Drahtfeder 71 vorgespannt. In jedem Schuh ist außerdem ein Röllchen um eine zur Auszugsrichtung senkrechte Achse drehbar aufgenommen, und das Röllchen 28 ragt etwas aus dem Schuh heraus.

In Fig. 3 erkennt man die Lage der Stufen 68, die um reichlich die Dicke eines Fotoabzugs weiter über das Gehäusebodenniveau hinaussteht als die Oberfläche des Haftbelages 26. In der Ruhestellung des Schiebers liegt der unterste Abschnitt der Schuhe ein Stück weiter von der Kante 72 der Stufe entfernt, und die dem Stapel zugekehrte Fläche des Separatorstegs ist keilartig abgeschrägt derart, daß bei Auflaufen des Separators auf die Stapelkante die Fotos, an deren gegenüberliegender Kante die Haken 22 angreifen, längs der Schräge abwärts « wandern », in Richtung auf die ihnen zugekehrte Kante 72 der Stufen. Nur gerade die führende Kante eines einzigen Fotos hat zwischen den Schuhen 69 und den Haftbelag 26 soviel Platz, daß dieses im Stapel unterste Foto in den sich bildenden Spalt zwischen Schuhen 69 und Haftbelägen 26 eintreten kann, solange dieser Spalt von der Stufe 68 offengehalten wird. Alle anderen, vom Haken 22 mitgeführten Fotos stoßen an den Separator selbst oder an dessen Schuhe an mit der Folge, daß die Haken von deren Endkante abrutschen.

Wenn die in Auszugsrichtung hinteren Kanten der Schuhe 69 die Kante 72 der Stufen 68 passiert haben, senken sich die Schuhe unter der Wirkung der Drahtfeder 71, wobei die Rollen 28 sich auf das so abgetrennte einzelne Foto setzen und dieses auf die zugeordneten Haftbeläge pressen, wodurch es im Gehäuse — also dem ersten Rahmenteil — festgehalten wird. Der Reststapel wird vom Separator zusammen mit dem Schieber nach außen mitgenommen, bis dieser ganz ausgezogen ist.

Dabei ist zu beachten, daß die Federarme 32 ja auch vom Separatorsteg überlaufen werden. Damit sie während des Durchlaufs ihrer am Stapel angreifenden Enden nicht das abgetrennte Bild von unten belasten, werden sie während einer bestimmten Phase des Auszugshubes mechanisch in Richtung Gehäuseboden gedrückt. Hierzu dienen an die Schieberholme 44 angeformte Kufen 73, die seitlich von den Federarmen auskragende Ansätze 74 überstreichen und die Arme entsprechend ihrer Länge auf einem Teilhub halten. Weitere Kufen 75 an den Schieberholmen laufen auf die Federarme 24 an der Verbreiterung 76 auf, sobald das Einzelfoto zwischen Haftbelag und Rollen sicher geklemmt ist, und drücken diese Arme ebenfalls vom Sichtfenster weg, so daß man ungehindert weitere Fotos einfüllen, andere entnehmen kann.

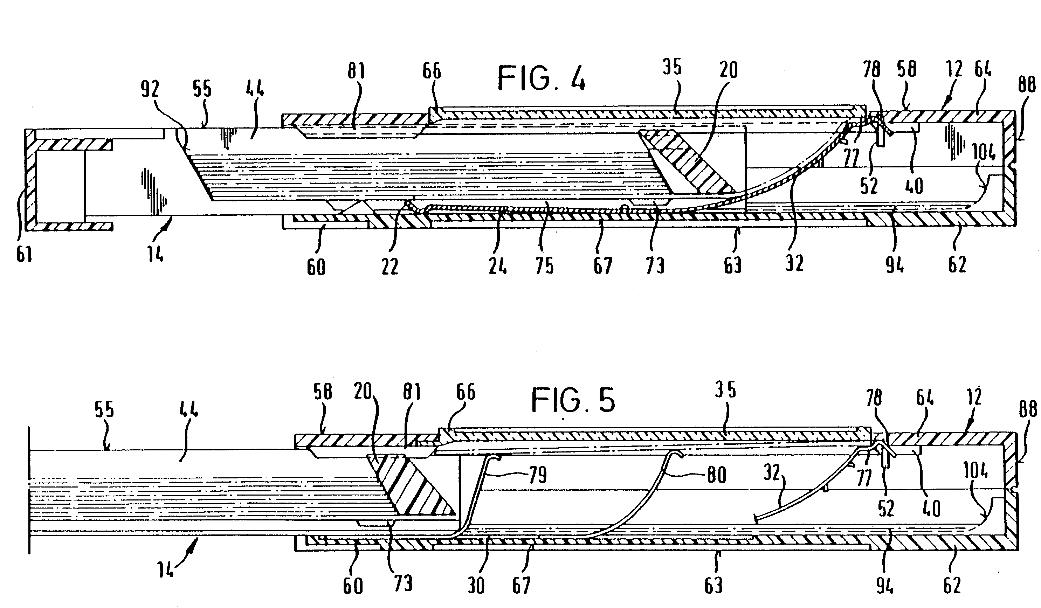

Auf der dem Stapel abgewandten Seite des Separators werden die Federarme 32 nach kurzem Hub wieder freigegeben, so daß sie wieder unter das vereinzelte Foto greifen und dessen hintere Kante allmählich in Richtung Fenster führen Schließlich legt sich diese Kante unter der Wirkung der Federn an die Gehäuseoberseite an. Da die freien Enden der Federarme abgerundet sind, andererseits aber diese Kante sicher an der erreichten Position festgeklemmt werden soll, ist an den Federarmen noch ein kurzes Stück geradlinig ausgebildet, in Fig. 4 mit 77 bezeichnet. Das abgerundete Federarmende findet dabei Platz in einer Ausnehmung auf der Innenseite der Gehäusedeckwand, in Fig. 5 mit 78 bezeichnet.

Die beiden Haken 22, die beiden Schuhe 69, die Haftbeläge 26 und die Federarme 32 sind sämtlich jeweils symmetrisch bezüglich der Mittelebene der Gesamtvorrichtung angeordnet, und die beiden Haken 22 liegen so genau wie möglich auf einer zu dieser Symmetrieebene senkrechten Linie. Das hat zur Folge, daß das zu wechselnde Foto auch dann ohne Verdrehung den Wechselvorgang durchläuft, wenn es wegen Untermaß nicht an den Schieberholmen geführt ist. Die Abmessungstoleranzen von Fotos sind nämlich bei gleicher Nenngröße unterschiedlich in Quer- und Längsrichtung : Da in den Entwicklungsanstalten die Papiere von Rollen recht genau eingehaltener Breite verarbeitet werden, die dann auf unterschiedliche Länge geschnitten werden, ist es bevorzugt, in Richtung der Schieberbewegung das Fotomaß vorzusehen, das enger toleriert ist.

Das abgetrennte Einzelbild, das bis jetzt nur an seiner einen Kante eingeklemmt gehalten beschrieben worden ist, wird als ganzes in Richtung Fenster gehoben. Hierzu dienen die schon erwähnten Blattfedern 30 mit frontseitigen Armen 79 und rückseitigen Armen 80, die wie in Fig. 5 deutlich erkennbar — das Einzelfoto so halten und abstützen, daß es beim Schieberrückhub wieder auf den Stapel gelangen kann. Im geschlossenen Zustand der Vorrichtung und während des Auszugshubes des Schiebers — zumindest während des ersten Teils desselben — sind die Federarme 79, 80 von den Holmen des Schiebers in entsprechende Nuten des Gehäusebodens gedrückt, die in Fig. 6 erkennbar sind.

Zu Beginn des Rückhubs des Schiebers ist das Einzelfoto von den Federarmen 32 vor den an das Gehäuse angeformten Anschlägen 52 eingeklemmt und wird in Richtung Separatorsteg an vier Stellen von den Federarmen 79, 80 abgestützt. Die dem Separatorsteg zugekehrte andere Querkante des Fotos kann nach unten durchhängen ; die ihr zugekehrte Seite des Separators ist jedoch keilförmig abgeschrägt, so daß die Kante allmählich gehoben wird, wenn der Separatorsteg auf sie zuläuft. Zwischen der Oberkante des Separatorstegs und der Gehäusedeckwand ist ein Spalt, der für den Durchlaß des Fotos reichlich bemessen ist. Der Gefahr, daß das Foto auf die ihm zugekehrt liegenden Kanten des vom Schieber mitgeführten Reststapels aufstößt, wird dadurch begegnet, daß die Gehäusedeckwand innen Niederhaltenocken 81 aufweist, die den Stapel unter dem Niveau der Separatoroberseite halten. Diese Niederhaltenocken stehen ausgefluchtet mit den Rippen 40, so daß sie durch die entsprechenden Ausschnitte 42, 54 des Separatorsteges passen.

Das Griffstück-Schiebeteil 38 ist gleitbeweglich im Griffstück aufgenommen und steht unter Federvorspannung in Richtung Gehäuse, wie in Fig. 3 gut erkennbar. Beim Einschub des Schiebers trifft seine freie Kante 82 auf einen im Gehäuse vorgesehenen Anschlag 83, wodurch er in das Griffstück zurückgedrückt wird und nicht in den durch das Gehäusefenster sichtbaren Raum ragt. Nach dem Herausziehen hingegen sichert er die im Schieber liegenden Fotos gegen Herausfallen. Zum Wechseln der Fotos kann er von Hand zurückgedrückt werden, was durch Fingerkante 84 erleichtert wird. Man kann die Fotos von der Unterseite des Schiebers her, zwischen die Holme greifend, herausdrücken oder neben dem Griffstück von oben hineinfassen.

Die oben beschriebene und dargestellte Ausbildung des Federsystems, gebildet von den einstückig geschnittenen und paarweise symmetrisch angeordneten Federn mit den Federarmen 24 und 32, erfüllt insgesamt fünf Funktionen. Erstens bilden die an ihnen angeformten Haken 22 die Zufuhreinrichtung, wobei die Haken letztlich nur ein Blatt in die Trenneinrichtung mitnehmen. Zweitens bilden beide Arme gemeinsam — genauer gesagt, die vier Arme beider Federn — ein Andrucksystem, mit dem der Stapel bei ruhender Vorrichtung sauber gegen das Fenster gedrückt wird. Drittens dient der Arm 32 dazu, nachdem er vom Separator überlaufen worden ist, das Einzelblatt an die Gehäusedeckwand zu fördern und es dort, viertens, festzuklemmen. Fünftens schließlich sind die Arme 32 dicht genug neben den Haftbelägen 26 angeordnet, daß sie ein gegebenenfalls infolge statischer Aufladung am Haftbelag anhaftendes Einzelblatt infolge ihrer Vorspannkraft von diesem abschälen können. Anzumerken ist, daß der Arm 32 so geformt und angeordnet ist, daß er vom Separatorsteg überlaufen werden kann, ohne daß es zu einer Störung der glatten Handhabung führt.

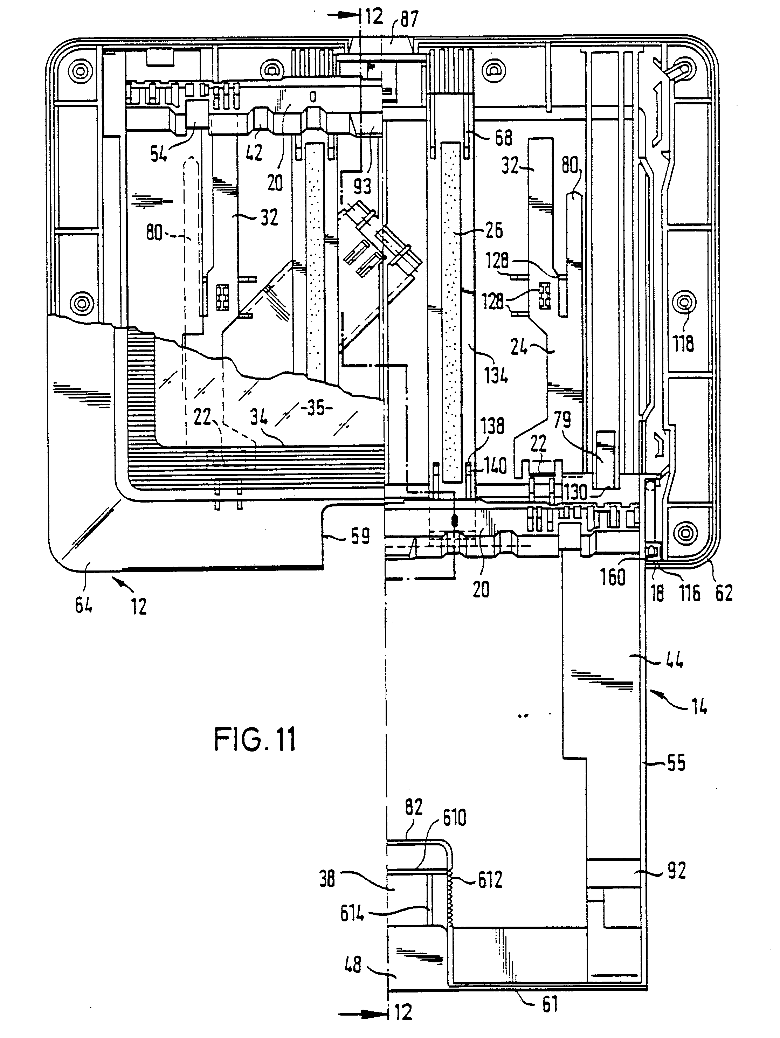

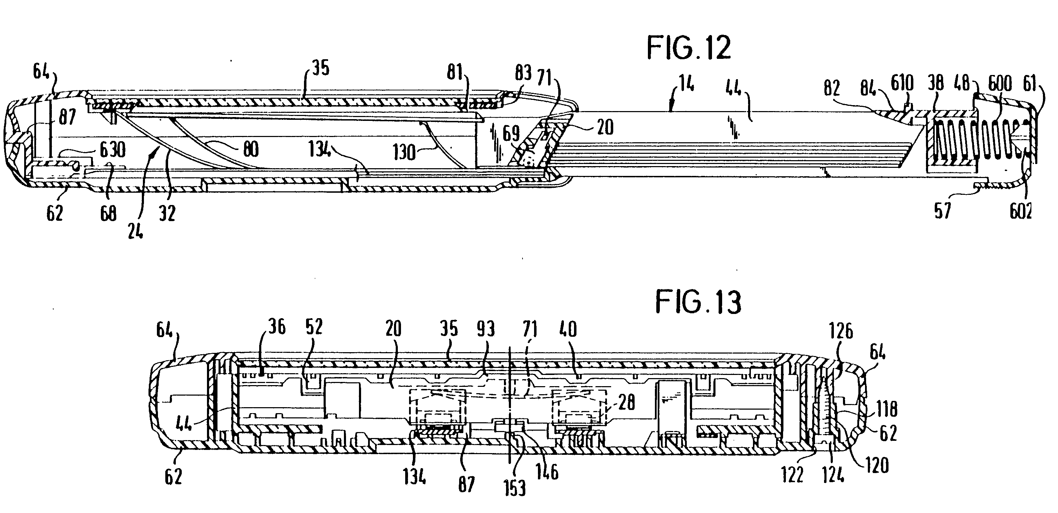

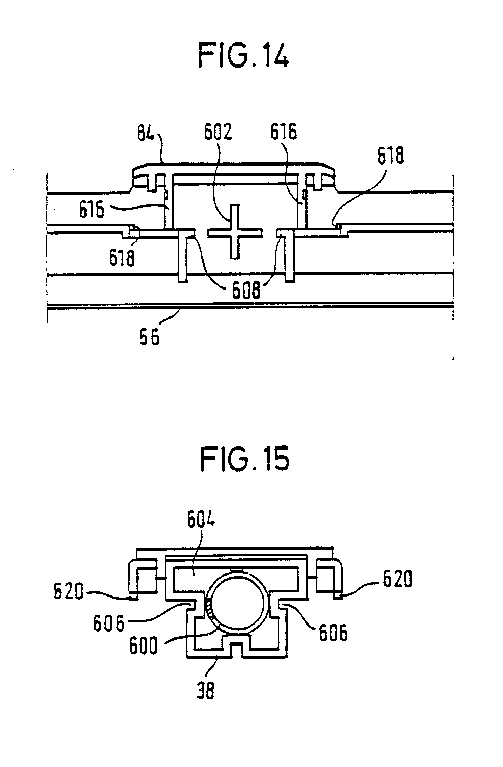

In den Fig. 11 bis 15 ist ein weiteres Ausführungsbeispiel eines Bildwechslers dargestellt. Im Gehäuse 12 ist der Schieber 14 verschieblich aufgenommen; Gehäuse 12 bildet das erste Rahmenteil, Schieber 14 das zweite. Der Auszugshub ist durch ein an einen der Schieberholme 44 angeformtes Lagerauge 116, das auf einen gehäuseseitigen Anschlag 18 aufläuft, begrenzt. Das Gehäuse ist aus einer Oberschale 64 und einer Unterschale 62, deren Außenränder formschlüssig ineinandergreifen, zusammengeschraubt, und zwar in dem Bereich zwischen den Schieberholmen 44 und den zu ihnen parallelen Außenkanten des Gehäuses. Hierfür weist jeweils die Unterschale angeformte Führungshülsen 118 für Schraubenschäfte 120 sowie außenseitige Einsenkungen 122 für Schraubenköpfe 124 auf, während die Oberschale dazu koaxial angeformte Kernloch-Hülsen 126 trägt, in die die Schrauben ihr Gewinde selbst schneiden. In die Oberschale 64 ist das Fenster 35 eingeklipst, und die unter seinen äußeren Randbereichen liegenden Teile der Oberschale sind dadurch nicht sichtbar, daß diese Bereiche des Fensters mattiert sind. In Fig. 11 ist die Kontur des mittleren, transparenten Fensterabschnitts mit 34 markiert.

Funktionell bestehen wenig Unterschiede gegenüber dem Ausführungsbeispiel nach Fig. 1 bis 10, so daß es genügt, nur die markanten Abweichungen zu erläutern.

Hier sind die Federarme 24, 32 und 80 zu einem Stanz- und Biegeteil zusammengefaßt und mittels Nocken 128 positioniert und kalt festgebördelt. Dagegen sind die Federarme 79 gesonderte Bauteile, die mittels angeformter Nocken an der Unterschale positioniert und kalt festgebördelt werden. Damit dieser Federarm das vereinzelte Bild möglichst frühzeitig hochheben kann, weist der zugehörige Schieberholm 44 Ausschnitte 130 auf. Das sichere Festhalten des vereinzelten Bildes ist während dieser Phase des Wechselzyklus durch die Federarme 80 gewährleistet, die die dem Schieber abgewandte Endkante des Bildes klammerartig nach oben drücken.

Die beiden Haftbelagstreifen 26 sind auf je einem gesondert gefertigten Steg 134 angeordnet. Beidseits des Streifens 26 kann gegebenenfalls der Steg 134 angeformte Federbrücken aufweisen, die nach Überlaufen durch den Separatorsteg 20 nach oben ausfedern und die Bildkante liften, oder man kann gesonderte metallische Federblätter vorsehen.

Die Stege 134 sind spiegelsymmetrisch gestaltet, so daß sie also an beiden Enden Stufen 68 mit Kanten 72 aufweisen. Der Grund liegt darin, daß dann beim automatischen Beschichten der Stege mit dem Haftbelag kein Sortieren erforderlich ist. Allerdings sind dann zusätzlich Löcher 138 vorzusehen, durch die am griffseitigen Ende des Gehäuses an dessen Unterschale angeformte Auffahrkeile 140 für den Separatorsteg ragen. Die Befestigung der Stege in der Unterschale erfolgt durch Eindrücken von Nasen in entsprechende Rinnen der Gehäuseunterschale, und die genaue Positionierung erfolgt mittels eines der beiden Zapfen, nämlich mittels des dem Schiebergriff abgewandten Zapfens, während dem anderen Zapfen ein gehäuseseitiges Langloch zugeordnet ist.

Eine Druckfeder 600 drückt das als Niederhalter dienende Griffstück-Schiebeteil 38 über den Bilderstapel. Die Aufnahme der Druckfeder 600 wird auf Seiten des Schiebers 14 durch einen Kreuzzapfen 602 und auf Seiten des Griffstück-Schiebeteils 38 durch dessen Hohlkammer 604 gewährleistet. Die Führung des Griffstück-Schiebeteils 38 wird durch dessen Nuten 606, die Rippen 608 aufnehmen, vorgenommen. Das Griffstück-Schiebeteil 38 kann sowohl an einer an seiner Oberseite befindlichen Rippe 610 als auch an seiner seitlichen Riffelung 612 zurückgezogen werden. Zwei Schlitze 614 im Griffstück-Schiebeteil 38 nehmen Führungsrippen 616 am Griffstück 48 auf. Die Hubbegrenzung erfolgt durch miteinander in Eingriff bringbare Anschläge 618, 620 am Griffstück 48 bzw. am Griffstück-Schiebeteil 38.

Im ausgezogenen Zustand des Schiebers 14 ist das Griffstück-Schiebeteil 38 maximal in Richtung auf den Bilderstapel ausgefahren, so daß dieser gegen Herausfallen gesichert wird. In dieser Position kann das Griffstück-Schiebeteil 38 von oben oder seitlich ergriffen werden, um das Griffstück-Schiebeteil 38 soweit in Richtung auf das Griffstück 48 zurückzuziehen, daß der Bilderstapel freiliegt. Wird der Schieber 14 in das Gehäuse 12 zurückgeschoben, stößt die Rippe 610 gegen den Anschlag 83, bevor der Schieber 14 gänzlich in das Gehäuse 12 eingeschoben ist. Durch das gänzliche Einschieben des Schiebers 14 wird das Griffstück-Schiebeteil 38 in eine mittlere zurückgezogene Position gebracht, in der sich seine freie Kante 82 im Bereich der Niederhaltenocken 81 und daher nicht in dem durch das Fenster 35 sichtbaren Bereich befindet. In dieser Stellung befindet sich der Endbereich des Griffstück-Schiebeteils 38 benachbart seiner freien Kante gerade soweit über dem Bilderstapel, daß das Griffstück-Schiebeteil auch im eingeschobenem Zustand des Schiebers 14 seine Niederhaltefunktion zusätzlich zu den Niederhaltenocken 81 ausüben kann, um das oberste Bild des Stapels im Abstand zum Fenster 35 zu halten.

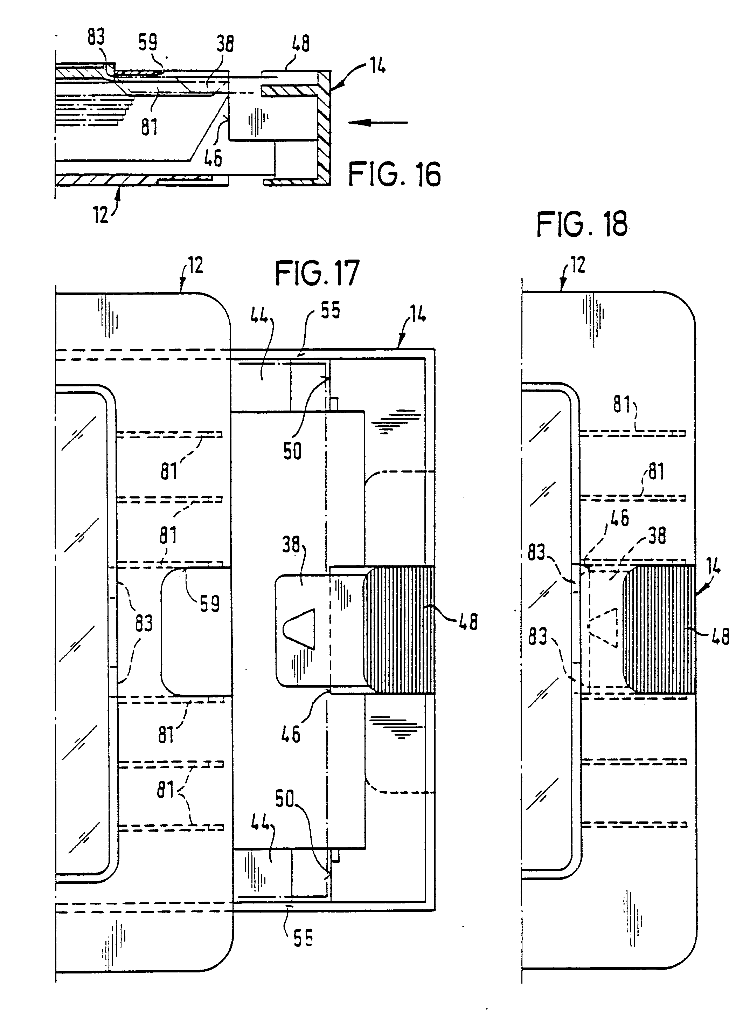

Fig. 16 bis 18 zeigen das Griffstück-Schiebeteil 38 im Zusammenwirken mit dem Gehäuse 12, wobei Fig. 17 der Lage gemäß Fig. 1 entspricht, wobei das Griffstück-Schiebeteil 38 seine äußere Endstellung einnimmt. Wird jetzt der Schieber 14 eingeschoben, stößt des Griffstück-Schiebeteil 38 auf den kantenförmigen Anschlag 83 und wird hierdurch etwas in bezug auf das Griffstück 48 eingeschoben. Zur Entnahme des Bilderstapels kann es noch weiter bis zur Freigabe des Stapels manuell zurückgeschoben werden.

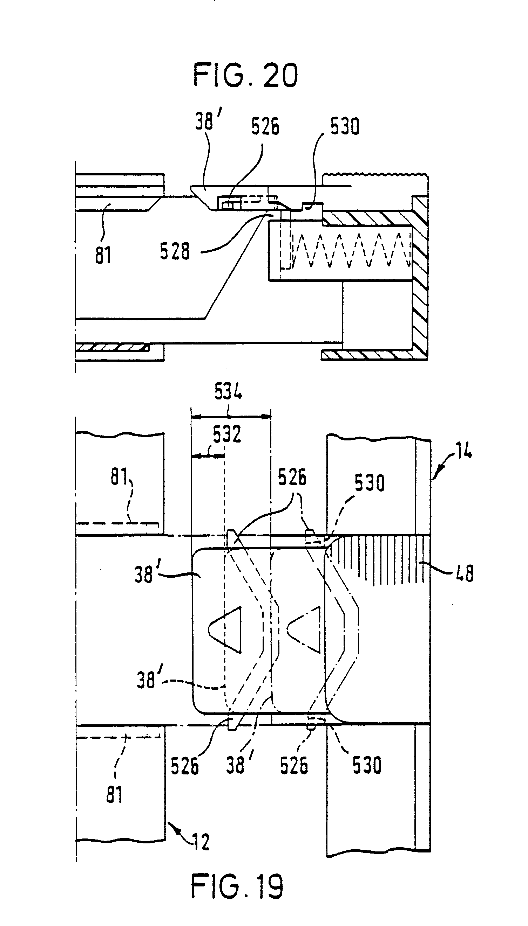

Fig. 19, 20 zeigen eine Ausführungsform eines Griffstück-Schiebeteils 38, das sich in seiner bezüglich des Griffstücks 48 innersten Position selbsttätig verriegelt. Hierfür sind am Griffstück-Schiebeteil 38 zwei Federarme 526 angelenkt, die während des normalen Wechselbetriebes zwar einwärts ausgelenkt werden, sich dabei aber in Führungen 528 noch nicht verriegeln können. Erst wenn das Griffstück-Schiebeteil 38 ganz eingedrückt wird, erfolgt die Verriegelung an einer Stufe 530. Wird dann der Schieber 14 erneut ins Gehäuse 12 eingefahren, so stoßen die Federarme 526 auf die Rippen 81 und werden dadurch ausgelöst. Die Pfeile 532 bzw. 534 verdeutlichen die teileingeschobene bzw. ganz eingeschobene Position des Griffstück-Schiebeteils 38.

## Patentansprüche

1. Behälter für einen Stapel von gleichformatigen rechteckigen Blättern mit einem Gehäuse (12), das mit einem an das Blattformat angepaßten Sichtfenster (35) für das oberste Blatt des Stapels versehen ist, und mit einem parallel zur Fensterebene aus dem Gehäuse herausziehbaren und wieder einschiebbaren Schieber (14) zur Entnahme mindestens eines Blattes aus dem Gehäuse, der im Bereich seiner Stirnwand (61) einen beweglichen, das mindestens eine Blatt übergreifenden Niederhalter (38) aufweist, dadurch gekennzeichnet, daß der Niederhalter

bei herausgezogenem Schieber in die das mindestens eine Blatt übergreifende Position federvorgespannt und manuell gegen die Federvorspannung (600) in eine Blattfreigabeposition verlagerbar ist, und

bei eingeschobenem Schieber durch Anschläge (83) außerhalb des vom Sichtfenster exponierten Bereichs des obersten Blattes gehalten wird.

2. Behälter nach Anspruch 1, dadurch gekennzeichnet, daß der Niederhalter in Richtung der Schieberbewegung verlagerbar ist.

3. Behälter nach Anspruch 2, dadurch gekennzeichnet, daß der Niederhalter (38) parallel zu der Fensterebene verlagerbar ist.

4. Behälter nach einem der vorangehenden Ansprüche, dadurch gekennzeichnet, daß der Niederhalter (38) den mittleren Bereich der Blattquerkante übergreifend ausgebildet und angeordnet ist.

5. Behälter nach einem der vorangehenden Ansprüche, dadurch gekennzeichnet, daß die Anschläge (83) eine Position des Niederhalters definieren, die zwischen der blattübergreifenden und der Blattfreigabeposition liegt.

6. Behälter nach Anspruch 5, dadurch gekennzeichnet, daß der Niederhalter (38) in der Zwischenposition die Blattquerkante gerade noch übergreift.

7. Behälter nach einem der vorangehenden Ansprüche, dadurch gekennzeichnet, daß der Niederhalter (38) mit seiner dem Blatt zugekehrten Seite eine Ebene definiert, die von der Innenseite des Sichtfensters (35) beabstandet liegt.

8. Behälter nach Anspruch 7, dadurch gekennzeichnet, daß das Gehäuse (12) einwärts einspringende Rippen (81) aufweist, die bei eingeschobenem Schieber (14) dieselbe Querkante des Blattes übergreifen wie der Niederhalter (38) und mindestens denselben Abstand von der Innenseite des Sichtfensters (35) definieren wie jener.

9. Behälter nach einem der vorangehenden Ansprüche, dadurch gekennzeichnet, daß das Sichtfenster (35) eine zu der Schieberstirnwand (61) im wesentlichen parallele Endkante im Abstand von der Gehäusekontur aufweist und daß der Schieber (14) Blattanschläge (50) im Abstand von seiner Stirnwand aufweist, die bei eingeschobenem Schieber zumindest das dem Fenster zugekehrte Blatt bezüglich desselben ausrichten.

10. Behälter nach Anspruch 9, dadurch gekennzeichnet, daß der Niederhalter (38) in dem Bereich des Schiebers (14) zwischen dessen Stirnwand (61) und den Blattanschlägen (50) angeordnet ist.

11. Behälter nach Anspruch 10, dadurch gekennzeichnet, daß der Niederhalter (38) in diesem Schieberbereich gleitbeweglich geführt ist.

12. Behälter nach Anspruch 10 oder 11, dadurch gekennzeichnet, daß eine Aussparung für eine Vorspannfeder (600) in diesem Schieberbereich ausgebildet ist.

13. Behälter nach Ansprüchen 11 und 12, dadurch gekennzeichnet, daß die Vorspannfeder (600) symmetrisch bezüglich der Niederhalterführungen (46) auf den Niederhalter (38) wirkend angeordnet ist.

14. Behälter nach einem der Ansprüche 10-13, dadurch gekennzeichnet, daß der Niederhalter (38) in Richtung der Schieberbewegung eine Abmessung aufweist, die höchstens dem Abstand zwischen der Schieberstirnwand (61) und den Blattanschlägen (50) in derselben Richtung entspricht.

15. Behälter nach einem der Ansprüche 9-14, dadurch gekennzeichnet, daß der Schieber in dem Bereich zwischen seiner Frontwand (61) und den Blattanschlägen (50) eine Griffpartie aufweist.

16. Behälter nach Anspruch 15 und einem der Ansprüche 10 bis 14, dadurch gekennzeichnet, daß der Niederhalter (38) und die Griffpartie in Richtung quer zur Schieberbewegung versetzt angeordnet sind.

17. Behälter nach Anspruch 16, dadurch gekennzeichnet, daß die Griffpartie eine fensterseitige (56) und eine dieser gegenüberliegende Griffplatte (57) umfaßt und der Niederhalter (38) und seine Führung zwischen beiden Griffplatten angeordnet sind.

18. Behälter nach einem der vorangehenden Ansprüche, dadurch gekennzeichnet, daß der Niederhalter (38) bei eingeschobenem Schieber zumindest teilweise von einer Gehäusewandung (58) überdeckt ist.

19. Behälter nach einem der vorangehenden Ansprüche, gekennzeichnet durch Bremsmittel zum Halten des eingeschobenen Schiebers im Gehäuse gegen die Federvorspannung.

20. Behälter nach einem der vorangehenden Ansprüche, dadurch gekennzeichnet, daß der Niederhalter (38) quer zu seiner Bewegungsrichtung verlaufende Fingereingriffskanten (84) aufweist.

21. Behälter nach einem der vorangehenden Ansprüche, dadurch gekennzeichnet, daß der Niederhalter für manuelle Betätigung seitlich zugänglich ist.

22. Behälter nach Anspruch 11, dadurch gekennzeichnet, daß der Niederhalter (38) mittels angeformter Nuten und Rippen (606, 608) geführt ist.

23. Behälter nach einem der vorangehenden Ansprüche, dadurch gekennzeichnet, daß die freie Kante des Niederhalters (38) keilartig auf die Kante des mindestens einen Blattes auflaufend gestaltet ist.

24. Behälter nach einem der vorangehenden Ansprüche, dadurch gekennzeichnet, daß der Niederhalter (38) in der Blattfreigabeposition gegen die Federvorspannung verriegelbar ist.

25. Behälter nach Anspruch 24, dadurch gekennzeichnet, daß der Niederhalter (38) durch Einschieben des Schiebers (14) in das Gehäuse (12) entriegelbar ist.

26. Behälter nach Anspruch 25, dadurch gekennzeichnet, daß der Niederhalter (38) seitlich ausgestellte Federarme (526) zum Verriegeln aufweist, die durch Auflaufen auf gehäuseseitige Steuerflächen (81) in eine Entriegelungsposition verformbar sind.

27. Behälter nach einem der vorangehenden Ansprüche, gekennzeichnet durch eine Blattwechselmechanik für das zyklische Umschichten des Stapels mittels Herausziehen und Wiedereinschieben des Schiebers (14) in das Gehäuse (12).

28. Behälter nach Anspruch 27, dadurch gekennzeichnet, daß beim Herausziehen des Schiebers (14) aus dem Gehäuse (12) ein Blatt des Stapels im Gehäuse zurückbleibt, während der Schieber den Reststapel heraustransportiert, und daß das zurückgebliebene Blatt auf die andere Stapelseite verlagert wird.

## Claims

1. Container for a pile of rectangular sheets of like format with a housing (12) which is provided with a viewing window (35), matching the sheet format, for the uppermost sheet of the pile, and with a slider member (14), which can be pulled out of and pushed back into the housing parallel to the plane of the window, for removing at least one sheet from the housing, which slider member has in the region of its front wall (61) a movable holding-down member (38), the holding down member engaging on at least one sheet, characterized in that the holding-down member

is spring-biassed into the position in which it engages on the at least one sheet in the withdrawn slider member, and is displaceable manually against the spring bias (600) into a sheet release position, and

when the slider member is in the pushed-in state is held by stop members (83) outside the region of the uppermost sheet exposed by the viewing window.

2. Container according to claim 1, characterized in that the holding-down member is displaceable in the direction of movement of the slider member.

3. Container according to claim 2, characterized in that the holding-down member (38) is displaceable parallel to the plane of the window.

4. Container according to any one of the preceding claims, characterized in that the holding-down member (38) is constructed and arranged to engage on the central region of transverse edge of the sheet.

5. Container according to any one of the preceding claims, characterized in that the stop members (83) define a position of the holding-down member that lies between the position of engagement on the sheet and the position of release of the sheet.

6. Container according to claim 5, characterized in that the holding-down member (38) still just engages on the transverse edge of the sheet in the intermediate position.

7. Container according to any one of the preceding claims, characterized in that the holding-down member (38) defines, with its side that faces the sheet, a plane that lies spaced from the inner side of the viewing window.

8. Container according to claim 7, characterized in that the housing (12) has ribs (81) which snap-in inwardly and, when the slider member (14) is pushed in, engage on the same transverse edge of the sheet as does the holding-down member (38), and which define at least the same spacing from the inner side of the viewing window (35) as does the holding-down member (38).

9. Container according to any one of the preceding claims, characterized in that the viewing window (35) has an end edge, spaced from the housing contour and substantially parallel to the slider member front wall (61), and that the slider member (14) has sheet stop members (50) spaced from its front wall which, when the slider member is pushed in, align with the window at least the sheet facing the window.

10. Container according to claim 9, characterized in that the holding-down member (38) is arranged in the region of the slider member (14) between the front wall (61) thereof and the sheet stop members (50).

11. Container according to claim 10, characterized in that the holding-down member (38) is slidably mounted in this slider member region.

12. Container according to claim 10 or 11, characterized in that a recess for a bias spring (600) is provided in this slider member region.

13. Container according to claims 11 and 12, characterized in that the bias spring (600) is arranged symmetrically with respect to the holding-down member guides (46) to act on the holding-down member (38).

14. Container according to any one of claims 10 to 13, characterized in that the holding-down member (38), in the direction of movement of the slider member, is of a dimension that corresponds at most to the distance between the slider member front wall (61) and the sheet stop members (50) in the same direction.

15. Container according to any one of claims 9 to 14, characterized in that the slider member has a grip arrangement in the region between its front wall (61) and the sheet stop members (50).

16. Container according to claim 15 and any one of claims 10 to 14, characterized in that the holding-down member (38) and the grip arrangement are arranged offset in the direction transverse to the direction of movement of the slider member.

17. Container according to claim 16, characterized in that the grip arrangement comprises a window-side grip plate (56) and a grip plate (57) opposite thereto, and the holding-down member (38) and its guide are arranged between the two grip plates.

18. Container according to any one of the preceding claims, characterized in that the holding-down member (38) is covered over at least partially by a housing wall (58) when the slider member is in the pushed-in state.

19. Container according to any one of the preceding claims, characterized by a brake means for holding the pushed-in slider member in the housing against the spring bias.

20. Container according to any one of the preceding claims, characterized in that the holding-down member (38) has finger-engageable edges (84) extending transversely to its direction of movement.

21. Container according to any one of the preceding claims, characterized in that the holding-down member is accessible at the side for manual operation.

22. Container according to claim 11, characterized in that the holding-down member (38) is guided by means of integrally formed grooves and ribs (606, 608).

23. Container according to any one of the preceding claims, characterized in that the free edge of the holding-down member (38) is shaped in the form of a wedge so as to run onto the edge of the at least one sheet.

24. Container according to any one of the preceding claims, characterized in that the holding-down member (38) is lockable against the spring bias in the sheet release position.

25. Container according to claim 24, characterized in that the holding-down member (38) can be released by pushing the slider member (14) into the housing (12).

26. Container according to claim 25, characterized in that the holding-down member (38) has laterally projecting spring arms (526) for the locking function which, by running up onto guide faces (81) on the housing, can be deformed into a release position.

27. Container according to any one of the preceding claims, characterized by a sheet change mechanism for the cyclic rearrangement of the pile by pulling out the slider member (14) from, and pushing it back into, the housing (12).

28. Container according to claim 27, characterized in that when the slider member (14) is pulled out of the housing (12) a sheet from the pile remains in the housing, whilst the remainder of the pile is transported out by the slider member, and that the sheet that remains is placed on the other end of the pile.

## Revendications

1. Récipient pour une pile de feuilles rectangulaires de format identique, comportant un boîtier (12), qui est pourvu d'un voyant (35), qui est adapté au format des feuilles, pour la feuille la plus élevée de la pile, et un tiroir (14), qui peut être ressorti hors du boîtier et peut y être réinséré parallèlement au plan du voyant, sert à prélever au moins une feuille hors du boîtier et comporte, au voisinage de sa paroi avant (61), un dispositif de serrage mobile (38), qui s'engage au moins au-dessus d'une feuille, caractérisé en ce que

lorsque le tiroir est ressorti, le dispositif de serrage est précontraint par un ressort dans la position dans laquelle il s'engage au moins par-dessus une feuille, et peut être amené manuellement à l'encontre de la précontrainte du ressort (600), dans une position de libération de la feuille, et

lorsque le tiroir est à l'état inséré, le dispositif de serrage est retenu par des butées (23) à l'extérieur de la zone, exposée au niveau du voyant, de la feuille la plus élevée.

2. Récipient selon la revendication 1, caractérisé en ce que le dispositif de serrage peut être déplacé dans le sens du déplacement du tiroir.

3. Récipient selon la revendication 2, caractérisé en ce que le dispositif de serrage (38) peut être déplacé parallèlement au plan du voyant.

4. Récipient selon l'une des revendications précédentes, caractérisé en ce que le dispositif de serrage (38) est agencé et disposé de manière à s'engager par-dessus la zone médiane du bord transversal de la feuille.

5. Récipient selon l'une des revendications précédentes, caractérisé en ce que les butées (83) définissent une position du dispositif de serrage, qui est située entre la position d'engagement par-dessus la feuille et la position de libération de la feuille.

6. Récipient selon la revendication 5, caractérisé en ce que le dispositif de serrage (38) s'engage encore précisément par-dessus le bord transversal de la feuille, dans la position intermédiaire.

7. Récipient selon l'une des revendications précédentes, caractérisé en ce que le dispositif de serrage (38) définit, par sa face tournée vers la feuille, un plan qui est situé à distance de la face intérieure du voyant (35).

8. Récipient selon la revendication 7, caractérisé en ce que le boîtier (12) comporte des nervures rentrantes (81) qui, lorsque le tiroir (14) est à l'état inséré, s'engage par-dessus le même bord transversal de la feuille que celui sur lequel s'engage le dispositif de serrage (38) et définissent, par rapport à la face intérieure du voyant (35), la même distance que ledit bord.

9. Récipient selon l'une des revendications précédentes, caractérisé en ce que le voyant (35) comporte un bord d'extrémité, sensiblement parallèle à la paroi frontale (61) du tiroir, à distance du contour du boîtier et en ce que le tiroir (14) comporte des butées (50) pour les feuilles, qui sont situées à distance de sa paroi frontale et alignent au moins la feuille, tournée vers le voyant, par rapport à ce dernier, lorsque le tiroir est à l'état inséré.

10. Récipient selon la revendication 9, caractérisé en ce que le dispositif de serrage (38) est disposé dans la zone du tiroir (14) entre la paroi frontale (61) de ce dernier et les butées (50) pour les feuilles.

11. Récipient selon la revendication 10, caractérisé en ce que le dispositif de serrage (38) est déplaçable par glissement dans cette zone du tiroir.

12. Récipient selon la revendication 10 ou 11, caractérisé en ce qu'un évidement pour un ressort de précontrainte (600) est ménagé dans cette zone du tiroir.

13. Récipient selon les revendications 11 et 12, caractérisé en ce que le ressort de précontrainte (600) est disposé de manière à agir sur le dispositif de serrage (38) en étant placé symétriquement par rapport aux guides (46) du dispositif de serrage.

14. Récipient selon l'une des revendications 10-13, caractérisé en ce que le dispositif de serrage (38) possède, dans la direction du déplacement du tiroir, une dimension correspondant au maximum à la distance entre la paroi frontale (61) du tiroir et les butées (50) pour les feuilles, dans la même direction.

15. Récipient selon l'une des revendications 9-14, caractérisé en ce que le tiroir possède une partie formant poignée dans la zone située entre sa face frontale (61) et les butées (50) pour les feuilles.

16. Récipient selon la revendication 15 et l'une des revendications 10 à 14, caractérisé en ce que le dispositif de serrage (38) et la partie formant poignée sont disposés en étant décalés dans la direction transversale par rapport au déplacement du tiroir.

17. Récipient selon la revendication 16, caractérisé en ce que la partie formant poignée comporte une plaque de préhension (56) située du côté de la fenêtre et une plaque de préhension (57), située à l'opposé de la précédente, et en ce que le dispositif de serrage (38) et son guide sont disposés entre les deux plaques de préhension.

18. Récipient selon l'une quelconque des revendications précédentes, caractérisé en ce que, lorsque le tiroir est à l'état inséré, le dispositif de serrage (38) est recouvert au moins partiellement par une paroi (58) du boîtier.

19. Récipient selon l'une des revendications précédentes, caractérisé par des moyens de freinage servant à maintenir le tiroir inséré dans le boîtier à l'encontre de la précontrainte du ressort.

20. Récipient selon l'une des revendications précédentes, caractérisé en ce que le dispositif de serrage (38) comportent des bords (84) d'application des doigts, qui s'étendent transversalement par rapport à sa direction de déplacement.

21. Récipient selon l'une des revendications précédentes, caractérisé en ce que le dispositif de serrage est accessible latéralement pour son actionnement manuel.

22. Récipient selon la revendication 11, caractérisé en ce que le dispositif de serrage (38) est guidé à l'aide de rainures et de nervures (606, 608) formées par façonnage.

23. Récipient selon l'une des revendications précédentes, caractérisé en ce que le bord libre du dispositif de serrage (38) est réalisé à la manière d'un coin de manière à venir s'appliquer contre le bord d'au moins une feuille.

24. Récipient selon l'une des revendications précédentes, caractérisé en ce que le dispositif de serrage (38) peut être verrouillé dans la position de libération de la feuille, à l'encontre de la précontrainte du ressort.

25. Récipient selon la revendication 24, caractérisé en ce que le dispositif de serrage (38) peut être déverrouillé par insertion du tiroir (14) dans le boîtier (12).

26. Récipient selon la revendication 25, caractérisé en ce que le dispositif de serrage (38) comporte, pour le verrouillage, des branches de ressorts (526), qui font saillie latéralement et peuvent se déformer lorsqu'elles rencontrent des surfaces de commande (80) situées sur le boîtier, dans une position déverrouillée.

27. Récipient selon l'une des revendications précédentes, caractérisé par un mécanisme de changement de feuilles servant à réaliser le reclassement cyclique de la pile moyennant une extraction et une réinsertion du tiroir (14) dans le boîtier (12).

28. Récipient selon la revendication 27, caractérisé en ce que, lors de l'extraction du tiroir (14) hors du boîtier (12), une feuille de la pile subsiste dans le boîtier, alors que le tiroir extrait la pile restante, et que la feuille restante est amenée sur l'autre face de la pile.

FIG. 6

FIG. 1

FIG. 2

FIG. 3

EP 0 202 307 B1

FIG. 4

FIG. 5

FIG. 7

FIG. 8

FIG. 9

FIG. 10

FIG. 11

EP 0 202 307 B1

FIG.12

FIG.13

6

# FIG.14

# FIG.15

FIG. 16

FIG. 18

FIG. 17

FIG. 20

FIG.19